# EUROPEAN PATENT SPECIFICATION

(11) **EP 1 665 229 B1**
(45) Date of publication and mention of the grant of the patent: **23.09.2009**
(21) Application number: 04781935.4
(22) Date of filing: 23.08.2004
(51) Int. Cl.: G10L 13/02, G06F 17/21, G06F 17/30, H04M 3/493, G10L 15/26

(54) **SPEECH SYNTHESIS**
SPRACHSYNTHESE
SYNTHESE VOCALE

(30) Priority: 17.09.2003 US 503685 P; 09.08.2004 US 914583
(43) Date of publication of application: 07.06.2006
(73) Proprietor: MOTOROLA, INC., Schaumburg, IL 60196 (US)
(72) Inventor: CORRIGAN, Gerald, E., Chicago, Illinois 60626 (US); ALBRECHT, Steven, W., Glenview, Illinois 60025 (US)
(74) Representative: McLeish, Nicholas Alistair Maxwell
(86) International application number: PCT/US2004/027342
(87) International publication number: WO 2005/036524

(56) References cited:
- EP-A2- 0 945 851
- US-A- 6 098 041
- US-A1- 2003 028 369
- US-A1- 2003 028 369
- US-B1- 6 282 508
- US-B1- 6 377 913
- US-B1- 6 557 026
- US-B1- 6 810 379

## Description

### Background

Speech synthesis, or text-to-speech (TTS) conversion, requires that pronunciations be determined for each word in the text. The process controlling the conversion, known as a speech engine, typically has access to one or more pronunciation dictionaries, or lexical files, that store pronunciations of text words that are expected to be processed by the speech engine. For example, one pronunciation dictionary may be a dictionary of common words and another pronunciation dictionary may be provided to the search engine by a particular software application for words that are unique to the application, while the application is running. However, it can be expected that some words are not in a given set of pronunciation dictionaries, so methods are also included in the speech engine for generating pronunciations for unknown words without using a pronunciation dictionary. These methods are error-prone.

TTS is a highly desirable feature in many situations, of which two examples are when a cellular telephone is being used by a driver, and when a cellular phone is used by a sight impaired person. Thus, TTS is valuable in electronic devices having limited resources, so there is a challenge to minimize the size of pronunciation dictionaries used in such resource limited devices, while at the same time minimizing pronunciation errors for unknown words.

The two examples described above are situations of a client device (a cellular telephone) that are typically operated in a radio communication system, by which the client devices can be connected to the world-wide-web. The world wide-web consortium (W3C) is developing a standard for pronunciation dictionaries for speech applications written using such tools as VoiceXML (located at URL www.w3.org/TR/lexicon-reqs).

US 2003/0028369 describes a dictionary management apparatus for speech conversion that checks for unregistered character data. When unregistered character data has been included the apparatus generates new dictionary data of the character data using another dictionary.

### Brief Description of the Drawings

The present invention is illustrated by way of example and not limitation in the accompanying figures, in which like references indicate similar elements, and in which:
FIG. 1 is an electrical block diagram that shows a communication system that includes a client device in accordance with an embodiment of the present invention.
FIG. 2 is a software block diagram that shows a programming model of the client device of FIG. 1.
FIG. 3 is a flow chart of a method of speech synthesis method used in the communication system of FIG. 1.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Detailed Description of the Drawings

Before describing in detail the text to speech (TTS) conversion techniques in accordance with the present invention, it should be observed that the present invention resides primarily in combinations of method steps and apparatus components related to TTS conversion. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

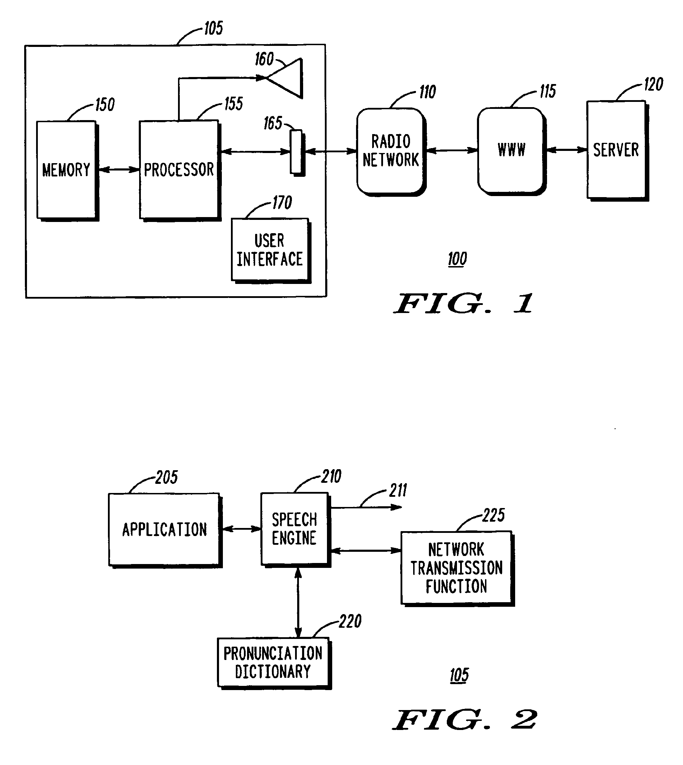

Referring to FIG. 1, an electrical block diagram of a communication system **100** is shown, in accordance with an embodiment of the present invention. The communication system **100** comprises a first device **105** that is a client device in the communication system **100,** such as a personal communication device, of which one example is a cellular telephone. The client device **105** is coupled to a radio communication network **110,** which in turn is coupled to the world-wide-web **115,** which of course is an information network that primarily uses wired and optical connections, but may include some radio connections. A second device **120** that is a server device is also coupled to the world-wide-web **115.**

The client device **105** comprises a processor **155** that is coupled to a memory **150,** a speaker **160,** a network interface **165,** and a user interface **170.** The processor**155** may be a microprocessor, a digital signal processor, or any other processor appropriate for use in the client device **105.** The memory **150** stores program instructions that control the operation of the processor **155,** and may use conventional instructions to do so, in a manner that provides a plurality of largely independent functions. Some of the functions are those typically classified as applications. Many of the functions may be conventional, but certain of them described herein are unique at least in some aspects. The memory **150** also stores information of temporary, short lived, and long lived duration, such as cache memory and tables. Thus memory **150** may comprise storage devices of differing hardware types, such as Random Access Memory, Programmable Read Only Memory, Flash memory, etc. The speaker **160** may be a speaker as is found in conventional client devices such as cellular telephones. The network interface **165** may be a radio transceiver as found in a cellular telephone, or when the client device is, for example, a Bluetooth connected device, the network interface would be a Bluetooth transceiver. The network interface **165** could alternatively be a wireline interface for a client device that operates via a personal area network to a client device (not shown) that is connected by a radio network **110** to the world-wide-web, or could alternatively be a wireline interface for a client device that is connected directly to the world-wide-web **115.** The world-wide-web **115** could alternatively be a sizable private network, such as a corporate network supporting several thousand users in a local area. The user interface **170** may be a small or large display and a small or large keyboard. The server device **120** is preferably a device with substantial memory capacity in relationship to the client device **105.** For example, the server typically will have a large hard drive or drives (for example, 20 gigabytes of storage).

Referring to FIG. 2, a programming model of the client device **105** is shown, in accordance with embodiment of the present invention described with reference to FIG. 1. An application **205** and a word synthesis dictionary **220** are coupled to a speech engine **210.** A network transmission function **225** is coupled to the speech engine **210.** The application **205** is one of several software applications that may be coupled to the speech engine **210,** and is an application that generates a set of text words that are to be synthesized by the speech engine **210** which generates an analog signal **211** to provide an audible presentation using the speaker **160** of the client device **105.** The speech engine **210** may have embedded in its programming instructions and data within the memory **150** a function for synthesizing a voice presentation of a word directly from the combination of letters of the word. As is well known, such synthesis typically sounds quite artificial and can often be wrong, causing a user to misinterpret the words. Accordingly, the word synthesis dictionary **220** is provided and may comprise a set of common words and an associated set of pronunciations for the words, which reduces the misinterpretation of the words by a user. The word synthesis dictionary **220** may in fact comprise more than one set of words merged together. For example, a default set of common words and their pronunciations that is unchanged for differing applications may be combined with a set of words and their pronunciations associated with a specific application that are merged into the dictionary when the specific application is running. This can be effective when a set of differing applications are predetermined for use with the speech engine. For example, a telephone dialer may provide different words to the speech engine **210** than would a web browser. However, this approach can cause problems in the amount of memory that must be associated with each application to store the words and their pronunciations, as well as knowledge of exactly which words are stored by default in the dictionary **220.** However, the word synthesis dictionary, being located in a client device, can be fairly limited in its storage capacity (e.g., less than a megabyte).

In one embodiment of the present invention, an application may present a set of text words (without associated pronunciations) to the word synthesis dictionary **220** in the memory **150.** The set of text words may be a set of text words commonly used by the application, which are expected to be used by the application within a relatively short period of time - while the application is running (for example, anywhere from a part of a minute to many minutes), or, alternatively, they may be a set of text words that comprises a speech text. A speech text in the context of this application is a set of text words that are planned for imminent sequential presentation through the speaker **160.** For example, the sentence "The number entered is 847-576-9999" prepared for presentation to user in response to the user's entry of a phone number would be speech text. The digits 0,1,2,3,4,5,6,7,8,9 are examples of text words which would more likely be the set of digits anticipated for use by an address application. By a technique described below, the pronunciations of words not in the client device's word synthesis dictionary **220** are obtained remotely. For this purpose, the speech engine **210** is coupled to the network transmission function **225** for transmitting words over the network that are not in the client device's word synthesis dictionary **220.**

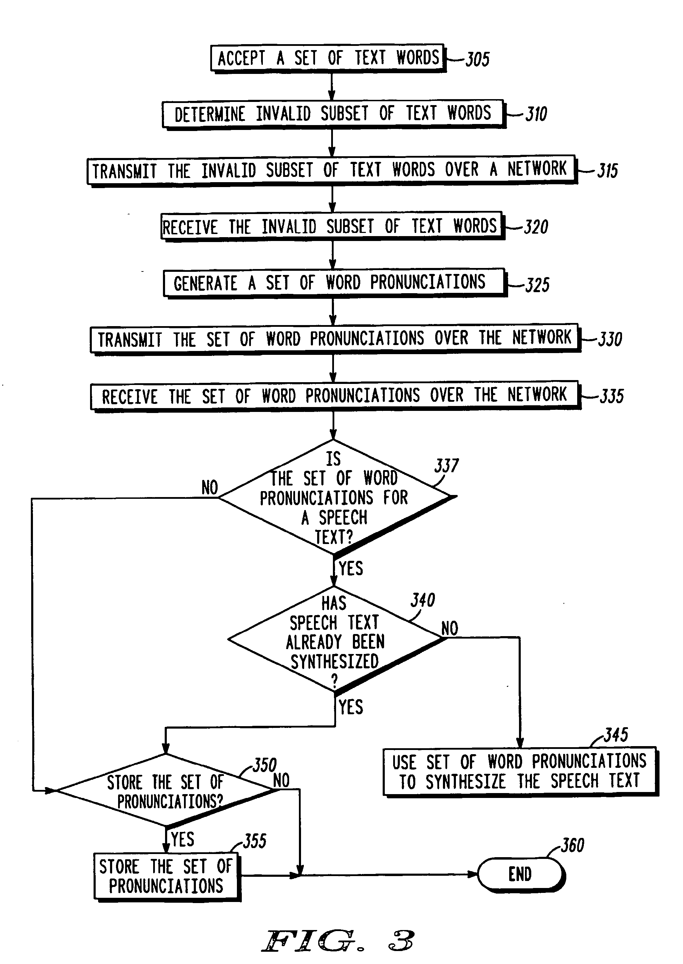

Referring to FIG. 3, a method is shown for speech synthesis, in accordance with embodiments of the present invention. The set of text words, whether speech text or otherwise, is accepted at step **305** by a function (such as the speech engine **210)** associated with the word synthesis dictionary **220** that determines at step **310** whether the presently configured word synthesis dictionary **220** includes the pronunciation of the set of text words. A resulting subset of text words for which pronunciations are not found comprises a subset of invalid words (when there are one or more such words). The client device **105** then transmits the invalid subset of text words at step **315** over a network to a server device. In the example described above with reference to FIG. 1, the network comprises the radio network **110** and the world-wide-web **115,** but the network may comprise a wired network without a radio network. The server device **120** receives the invalid subset of text words at step **320** and by referring to a large word synthesis dictionary within or accessible to the server device **120,** generates a set of word pronunciations at step **325** for the invalid set of text words. By being located within a server or other computer that is typically a fixed network device, the word synthesis dictionary can be large enough (e.g., greater than a gigabyte) to encompass virtually all words needed by all the client devices it serves. The server device **120** preferably generates the set of word pronunciations to include all of the text words of the invalid subset of text words. The set of word pronunciations could, of course, encompass as few as none of the text words. For the set of word pronunciations generated by the server, there is a pronunciation associated with each of the text words. At step **330,** the server transmits the set of word pronunciations over the network (or networks, as the case may be) to the client device **105.**

When the client device **105** receives the set of word pronunciations at step **335,** the client device **105** makes a determination whether the set of word pronunciations is associated with a speech text at step **337.** At step **340,** a determination whether the speech text has already been presented (synthesized). When the speech text has not yet been synthesized, the set of word pronunciations is used by the speech engine **210** at step **345** to provide a synthesis of the speech text, thereby reducing interpretation errors. When the speech text has already been synthesized at step **340** (as in the case in which the delay to receive the set of word pronunciations exceeds a minimum specified delay time, or the case in which a command to present the speech text is received before the set of word pronunciations is received), or when the set of word pronunciations is determined not to be for a speech text at step **337,** the client device **105** at step **350** determines whether the set of pronunciations is to be stored in the memory **150** of the client device **105** as an addition to the word synthesis dictionary of the client device **105.** Such storage may be for a predetermined time, e.g., while the application that requested the set of word pronunciations is active, or for example, based on limits of the memory **150,** or, for example, based on a priority of the application and memory limits and/or time, etc. When the set of pronunciations is to be stored in the memory **150,** they are stored at step **355**. The process ends at step **360.**

It will be appreciated that the present invention provides a unique technique for providing pronunciations of textwords in a client device having a restricted word synthesis dictionary capacity (e.g., less than one megabyte), thereby reducing misinterpretation errors.

In the foregoing specification, the invention and its benefits and advantages have been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

A "set" as used in the following claims, means a non-empty set. The term "another", as used herein, is defined as at least a second or more. The terms "including" and/or "having", as used herein, are defined as comprising. The term "coupled", as used herein with reference to electro-optical technology, is defined as connected, although not necessarily directly, and not necessarily mechanically. The term "program", as used herein, is defined as a sequence of instructions designed for execution on a computer system. A "program", or "computer program", may include a subroutine, a function, a procedure, an object method, an object implementation, an executable application, an applet, a servlet, a source code, an object code, a shared library/dynamic load library and/or other sequence of instructions designed for execution on a computer system.

## Claims

1. A method used in a client device (105) for speech synthesis, comprising:
accepting (305) a set of text words;
determining (310) an invalid subset of the set of text words, for which invalid subset the text words are not in a word synthesis dictionary of the client device (105);
transmitting (315) the invalid subset of text words over a network (110, 115) to a server device (120);
receiving (335) a set of word pronunciations over the network (110, 115) comprising zero or more of the text words of the invalid subset of text words, for which set of word pronunciations there is a pronunciation associated with each of text words; and adding at least one word pronunciation from the received set of word pronunciations to the word synthesis dictionary when the set of word pronunciations is received after a command to synthesize the set of text words is generated.

2. The method according to claim 1, wherein the set of text words comprises a speech text.

3. The method according to claim 1, wherein the set of text words comprises a set of words related to a particular application.

4. The method according to claim 1 further comprising:
generating (345) a synthesis of a word in the set of text words using at least one pronunciation from the set of word pronunciations.

5. The method according to claim 1 further comprising
receiving (320) at the server device (120) the invalid subset of text words;
generating (325) at the server device (120) a set of word pronunciations comprising zero or more of the text words of the invalid subset of text words, for which set of word pronunciations there is a pronunciation associated with each of the text words; and
transmitting (330) the set of word pronunciations over the network (110, 115).

6. A device (105) for speech synthesis, comprising:
a processor (155);
a memory (150) that stores program instructions that control the processor (155) to perform
an application function (205) that generates a set of text words,
a local word synthesis dictionary (220) function that stores text words and pronunciations therefore, and
a speech engine (210) that accepts the set of text words and determines an
invalid subset of the set of text words, for which invalid subset the text words are not found by the local word synthesis dictionary function;
a transmission function (225) for transmitting the invalid subset of text words over a network (110, 115) to a server device (120);
a receiver for receiving a set of word pronunciations over the network (110, 115) comprising zero or more of the text words of the invalid subset of text words, for which set of word pronunciations there is a pronunciation associated with each of text words;
and the processor (155) being arranged to add at least one word pronunciation from the received set of word pronunciations to the word synthesis dictionary (220) when the set of word pronunciations is received after a command to synthesis the set of text words is generated.

7. A personal communication device comprising the device for speech synthesis according to claim 6.

## Patentansprüche

1. Verfahren zur Verwendung in einer Client- bzw. dienstanfordernden Vorrichtung (105) zur Sprachsynthese, welches die folgenden Schritte aufweist:
Annahme (305) einer Gruppe von Textwörtern;
Bestimmung (310) einer ungültigen Teilmenge der Gruppe von Textwörtern, für welche ungültige Teilmenge die Textwörter nicht in einem Wortsynthese-Wörterbuch der Client-Vorrichtung (105) stehen;
Übertragung (315) der ungültigen Teilmenge von Textwörtern über ein Netzwerk (110, 115) an eine Server-Vorrichtung (120);
Empfang (335) einer Gruppe von Wortaussprachen über das Netzwerk (110, 115), welches keine bzw. null oder mehrere der Textwörter der ungültigen Teilmenge von Textwörtern umfasst, für welche Gruppe von Wortaussprachen es eine jedem der Textwörter zugehörige Aussprache gibt; und
Hinzufügen mindestens einer Wortaussprache aus der empfangenen Gruppe von Wortaussprachen zu dem Wortsynthese-Wörterbuch, wenn die Gruppe von Wortaussprachen nach Erzeugung eines Befehls zur Synthese der Gruppe von Textwörtern empfangen wird.

2. Verfahren nach Anspruch 1, **dadurch gekennzeichnet, dass** die Gruppe von Textwörtern einen Sprachtext aufweist.

3. Verfahren nach Anspruch 1, **dadurch gekennzeichnet, dass** die Gruppe von Textwörtern eine Gruppe von Wörtern aufweist, welche mit einer bestimmten Anwendung bzw. einem Einsatzfeld in Zusammenhang steht.

4. Verfahren nach Anspruch 1, welches des Weiteren den folgenden Schritt aufweist:
Erzeugung (345) einer Synthese eines Wortes in der Gruppe von Textwörtern unter Verwendung mindestens einer Aussprache aus der Gruppe von Wortaussprachen.

5. Verfahren nach Anspruch 1, welches des Weiteren die folgenden Schritte aufweist:
Empfang (320) der ungültigen Teilmenge von Textwörtern an der Server-Vorrichtung (120);
Erzeugung (325) einer Gruppe von Wortaussprachen an der Server-Vorrichtung (120), wobei die Wortaussprachen keine bzw. null oder mehrere der Textwörter der ungültigen Teilmenge von Textwörtern aufweisen, für welche Gruppe von Wortaussprachen eine einem jeden der Textwörter zugehörige Aussprache existiert; und
Übertragung (330) der Gruppe von Wortaussprachen über das Netzwerk (110, 115).

6. Vorrichtung (105) zur Sprachsynthese, welche Folgendes aufweist:
einen Prozessor (155);
einen Speicher (150), welcher Programmbefehle speichert, welche den Prozessor (155) zur Ausführung der folgenden Funktionen steuern:
eine Anwendungsfunktion (205), welche eine Gruppe von Textwörtern erzeugt;
eine lokale Wortsynthese-Wörterbuch (220)-Funktion, welche Textwörter und Aussprachen dafür speichert, und
einen Sprachmotor (210), welcher die Gruppe von Textwörtern annimmt und eine ungültige Teilmenge der Gruppe von Textwörtern bestimmt, für welche ungültige Teilmenge die Textwörter nicht von der lokalen Wortsynthese-Wörterbuchfunktion gefunden werden;
eine Übertragungsfunktion (225) zur Übertragung der ungültigen Teilmenge von Textwörtern über ein Netzwerk (110, 115) an eine Server-Vorichtung (120);
einen Empfänger zum Empfang einer Gruppe von Wortaussprachen über das Netzwerk (110, 115), welche keine bzw. null oder mehrere der Textwörter der ungültigen Teilmenge von Textwörtern aufweist, für welche Gruppe von Wort aussprachen es eine jedem der Textwörter zugehörige Aussprache gibt;
und wobei der Prozessor (155) derart angeordnet ist, dass er mindestens eine Wortaussprache aus der empfangenen Gruppe von Wortaussprachen zu dem Wortsynthese-Wörterbuch (220) hinzufügt, wenn die Gruppe von Wortaussprachen nach Erzeugung eines Befehls zur Synthese der Gruppe von Textwörtern empfangen wird.

7. Persönliche Kommunikationsvorrichtung, welche die Vorrichtung zur Sprachsynthese gemäß Anspruch 6 aufweist.

## Revendications

1. Procédé utilisé dans un dispositif client (105) pour une synthèse vocale, comprenant:
accepter (305) un ensemble de mots texte;
déterminer (310) un sous-ensemble invalide de l'ensemble des mots texte, sous-ensemble invalide pour lequel les mots texte ne se trouvent pas dans un dictionnaire de synthèse de mots du dispositif client (105) ;
transmettre (315) le sous-ensemble invalide des mots texte sur un réseau (110, 115) à un dispositif serveur (120) ;
recevoir (335) un ensemble de prononciations de mots sur le réseau (110, 115) comprenant zéro ou plus de mots texte du sous-ensemble invalide des mots texte, pour ledit ensemble de prononciations de mots, il y a une prononciation associée à chacun des mots texte; et ajouter au moins une prononciation de mots de l'ensemble de prononciations de mots reçu au dictionnaire de synthèse des mots lorsque l'ensemble des prononciations de mots est reçu après la génération d'une instruction pour synthétiser l'ensemble des mots texte.

2. Procédé selon la revendication 1, où l'ensemble de mots texte comprend un texte parole.

3. Procédé selon la revendication 1, où l'ensemble de mots texte comprend un ensemble de mots se rapportant à une application particulière.

4. Procédé selon la revendication 1, comprenant en outre:
produire (345) une synthèse d'un mot dans l'ensemble des mots texte en utilisant au moins une prononciation de l'ensemble des prononciations de mots.

5. Procédé selon la revendication 1, comprenant en outre
la réception (320) au dispositif serveur (120) du sous-ensemble invalide des mots texte;
la production (325) au dispositif serveur (120) d'un ensemble de prononciations de mots comprenant zéro ou plus de mots texte du sous-ensemble invalide de mots texte, ensemble de prononciations de mots pour lequel il y a une prononciation associée à chacun des mots texte; et
la transmission (330) de l'ensemble de prononciations de mots sur le réseau (110, 115).

6. Dispositif (105) pour une synthèse vocale, comprenant:
un processeur (155);
une mémoire (150) qui stocke des instructions de programme qui commandent au processeur (155) d'exécuter
une fonction d'application (205) qui produit un ensemble de mots texte,
une fonction de dictionnaire de synthèse de mots local (220) qui stocke les mots texte et les prononciations de ceux-ci, et
un moteur de parole (210) qui accepte l'ensemble des mots texte et détermine
un sous-ensemble invalide de l'ensemble des mots texte, sous-ensemble invalide pour lequel les mots texte ne sont pas trouvés par la fonction de dictionnaire de synthèse de mots local;
une fonction de transmission (225) pour transmettre le sous-ensemble invalide de mots texte sur un réseau (110, 115) à un dispositif serveur (120);
un récepteur pour recevoir un ensemble de prononciation de mots sur le réseau (110, 115) comprenant zéro ou plus de mots texte du sous-ensemble invalide des mots texte, pour ledit ensemble de prononciation de mots, il y a une prononciation associée à chacun des mots texte;
et le processeur (155) étant agencé pour ajouter au moins une prononciation de mot de l'ensemble de prononciations de mots reçu au dictionnaire de synthèse des mots (220) lorsque l'ensemble de prononciations de mots est reçu après la génération d'une instruction pour synthétiser l'ensemble des mots texte.

7. Dispositif de communication personnel comprenant le dispositif pour la synthèse vocale selon la revendication 6.
